# EUROPEAN PATENT SPECIFICATION

(11) **EP 4 385 216 B1**
(45) Date of publication and mention of the grant of the patent: **23.09.2026**
(21) Application number: 22813353.4
(22) Date of filing: 30.08.2022
(51) Int. Cl.: H04R 25/00, H02J 50/40, H02J 50/70, H01F 27/36, H02J 50/12

(54) **WIRELESS CHARGING DEVICE FOR HEARING INSTRUMENTS AND HEARING INSTRUMENTS SYSTEM**
DRAHTLOSE LADEVORRICHTUNG FÜR HÖRGERÄTE UND HÖRGERÄTESYSTEM
DISPOSITIF DE CHARGE SANS FIL POUR INSTRUMENTS AUDITIFS ET SYSTÈME D'INSTRUMENTS AUDITIFS

(30) Priority: 30.08.2021 SG 10202109492V
(43) Date of publication of application: 19.06.2024
(73) Proprietor: Sivantos Pte. Ltd., Singapore 539775 (SG)
(72) Inventor: NARAMPANAWE, Nishshanka Bandara, Singapore 649491 (SG); YAP, Heng Goh, Singapore 338521 (SG); RATHNAYAKA MUDIYANSELAGE, Sooriya Bandara, Woodlands Ave 9, 11-03 Singapore 738968 (SG); ONG, Chuan En Andrew, Singapore 680157 (SG)
(74) Representative: FDST Patentanwälte
(86) International application number: PCT/SG2022/050623
(87) International publication number: WO 2023/033733

(56) References cited:
- WO-A1-2022/225445
- US-A1- 2010 141 042
- US-A1- 2014 077 614
- US-A1- 2019 089 187
- TRENKLER Y ET AL: "Shielding improvement by multi-layer design", 19900821; 19900821 - 19900823, 21 August 1990 (1990-08-21), pages 1 - 4, XP010008495
- MOTTAHED B D ET AL: "a review of research in materials, modeling and simulation,design factors, testing, and measurements related to electromagnetic interference shielding", POLYMER-PLASTICS TECHNOLOGY AND ENGINEERING, TAYLOR & FRANCIS INC, US, vol. 34, no. 2, 1 March 1995 (1995-03-01), pages 271 - 346, XP002618543, ISSN: 0360-2559, DOI: 10.1080/03602559508015827

## Description

The invention relates to a wireless charging device for hearing instruments. The invention further relates to a hearing instruments system, especially comprising such a wireless charging device and two hearing instruments.

Hearing instruments (hearing devices) are usually portable devices used for providing sound to persons. Hearing instruments in the form of hearings aids (hearing aid devices) are used to provide care for the hard of hearing or hearing impaired. In order to meet the numerous individual needs, different types of hearing aids are available, such as behind-the-ear hearing aids (BTE) and hearing aids with an external receiver (RIC: receiver in the canal) as well as in-the-ear hearing aids (ITE). The hearing aids listed as examples are worn on the outer ear or in the ear canal of a hearing aid user. In addition, bone conduction hearing aids, implantable or vibrotactile hearing aids are also available on the market. These aids stimulate the damaged hearing either mechanically or electrically. Hearing instruments in general, however, also cover portable devices such as headsets, headphones, wearables and the like.

In principle, the main components of such hearing instruments are an input transducer, an amplifier and an output transducer. The input transducer is usually an acoustic-electric transducer, such as a microphone, and/or an electromagnetic receiver, such as an induction coil or an (radio frequency, RF) antenna. The output transducer is usually an electro-acoustic transducer, for example a miniature loudspeaker (receiver), or an electromechanical transducer, for example a bone conduction receiver. The amplifier is usually integrated into a signal processing device.

Hearing instruments are usually powered by batteries. The operating time is limited depending on the energy content of the batteries and the requirements of the hearing instrument. In view of the general trend towards miniaturisation, batteries with a small size are preferred, which additionally limits their energy content.

In order to avoid frequent replacement of used batteries, hearing instruments can be operated with rechargeable batteries (accumulators), such as nickel metal hydride (NiMH) or lithium-ion (Li-ion) batteries.

Batteries of hearing instruments are usually charged galvanically via metal contacts on the device. For regulatory reasons, medical devices in an increasing number of countries are not allowed to have open live parts. In addition, moisture, perspiration and other electrolyte-containing liquids and impurities can lead to corrosion of the metal contacts.

To avoid galvanic metal contacts, wireless charging systems can be used. Such a wireless charging system essentially comprises two components, a transmitter and a receiver. The transmitter plays an important role to generate and deliver energy to the receiver. The transmitter is formed by a charger circuit and transmitter coil. A receiver coil is usually defined as the wireless charging receiver.

The transmitter coil is usually integrated into a stationary (hearing instrument-external) charging device or hearing instrument charger, while the receiver coil is integrated into the hearing instrument and is coupled to the battery. The operation of wireless charging is the induction of an electromagnetic field in the (secondary) receiver coil when current is fluctuating in the (primary) transmitter coil. The receiver coil exposed to the varying electromagnetic field will capture the magnetic energy and convert it into electrical energy for the battery. Conventionally, a wire made of copper material is utilized to form a transmitter coil since its low ohmic resistance reduces energy losses due to heat generation.

Inductive charging systems usually require that the dimensions of the transmitter coil and of the receiver coil are at least nearly equal. That, however, limits the freedom of placement between receiver coil and transmitter coil. For the purpose of maximizing the energy transfer between the coils, the receiver coil must be placed close to the transmitter coil and in the same orientation to achieve a good coupling factor. Such a positioning or alignment is especially complicated with ITE hearing instruments, which are usually custom-made for the ear canal of the hearing instrument user, so that ITE hearing instruments differ from one device to another.

To achieve a high degree of placement freedom for the receiver coil, magnetic resonant (MR) charging can be used instead of inductive charging. MR charging can overcome a low coupling factor while preserving a high efficiency. For MR charging a high-quality factor for both the transmitter coil and the receiver coil at the resonance frequency is desired. Due to the possibility of using a low coupling factor it is possible to use a loose placement for the receiver on the top of the transmitter. As such, the receiver coil size can be reduced with respect to the transmitter coil size, i.e. the receiver coil can be designed smaller than the transmitter coil.

Since most hearing instruments come in pairs for presenting sound to both ears, the respective charging devices are designed to charge both hearing instruments at the same time. For that, for each hearing instruments one transmitter is realized in the charging device. However, with that comes a problem called "cross talk" or "cross-coupling".

Cross talk is the interference of a communication of one charging channel to the other charging channel that is sitting nearby - for space saving reasons in the above case usually directly adjacent. So, when the two transmitter coils are designed to sit close to each other, one transmitter coil would offset and deviate the resonance frequency of the other transmitter coil. Besides, one hearing instrument that communicates to the transmitter coil in the charger might also create cross talk to the adjacent transmitter coil. The cross talk effect would cause the failure of communication between the hearing instruments and the charger due to the incapability to recognize and decode the exact data transferred from the respective hearing instrument.

The cross talk effect of typical chargers having two transmitter coils that are sitting next to each other may be illustrated by using an LED connected to each coil that indicates the detection of a receiver coil in the vicinity (i.e. within the charging field) of that particular coil. The LED lits up if a receiver coil is detected and the data from that receiver captured. Placing a receiver coil over one of the transmitter coils would in many cases cause the LED of the other transmitter coil to light up also. That detection of the receiver coil by both transmitter coils indicates a crosstalk effect.

US 2019/0089187 A1 discloses a charger that includes: a hearing aid main body on which hearing aids are placed; a first feed coil that generates a first magnetic flux for performing electric-power feeding to the hearing aid; a second feed coil that generates a second magnetic flux for performing electric-power feeding to the hearing aid; and an electric-power transmission side controller that controls currents that are supplied to the first feed coil and the second feed coil such that the first magnetic flux and the second magnetic flux have inverted phases from each other.

Trenkler, Y, et al.: "Shielding improvement by multi-layer design", 19900821; 19900821 - 19900823, 21 August 1990, pages 1-4, XP010008495 describes composite shields containing both magnetic and conductive metals that have long been recognized as useful in shielding against low-impedance ("magnetic") fields. Increasing the amount of layers would improve the effectiveness without increasing the amount of metal employed.

Mottahed, B. D., et al.: "a review of research in materials, modeling and simulation, design factors, testing, and measurements related to electromagnetic interference shielding", POLYMER-PLASTICS TECHNOLOGY AND ENGINEERING, vol. 34, no. 2, 1 March 1995, pages 271-346, XP002618543, ISSN: 0360-2559, DOI:10.1080/03602559508015827 summarizes several aspects of electromagnetic shielding techniques.

The goal of the invention is to present a better way for charging two hearing instruments with the same charging device.

That goal is solved according to the invention by a charging device with the features of claim 1 as well as by a hearing instruments system with the features of claim 13. Expedient or further inventive embodiments are presented by the following description.

The basic principle of the invention is the integration of a shielding barrier between the (especially two) transmitter coils of a two-channel transmitter in order to attenuate cross coupling (or: "cross talk"). According to the present invention, the material of the shielding barrier is a stacked material (i.e. stacked layers of of two layers of a magnetic material sandwiching a layer of the electro-conductive material). Examples defining a shielding barrier consisting of a magnetic material, or an electro-conductive material only, do not form part of the present invention, but are described in the following in order to better understand the present invention. Expediently, larger dimensions of shielding barriers such as thicker thickness, longer length, and taller height lead to a better cross-coupling attenuation. Especially, at least one of input impedance, return loss and transmitted gain are used as the measurement parameters to quantify the effectiveness of cross-coupling attenuation.

Overall, the passing criteria for the shielding barrier are preferably based on at least one of the input impedance of a standalone transmitter coil, the transfer gain and the return loss of a standalone transmitter coil. Preferably at least a -20dB attenuation return loss for two-channel transmitter coils is sought.

The charging device according to the invention is set up for wirelessly charging hearing instruments. The charging device comprises a first transmitter coil for transmission of electromagnetic energy to a receiver coil of a first hearing instrument and a second transmitter coil for transmission of electromagnetic energy to a receiver coil of a second hearing instrument. Said second transmitter coil is aligned adjacent to said first transmitter coil, especially with their respective coil axes parallel to each other. Furthermore, the charging device comprises a shielding barrier (i.e. the shielding barrier mentioned above). Said shielding barrier has at least a wall that separates said first and second transmitter coils from each other. Said wall is preferably aligned parallel to said coil axes. Further, said wall is made of a stacked material made of layers of a magnetic material and an electro-conductive material.

Thus, each transmitter coil - in the intended charging state - makes up one charging (or transmitter) channel. The shielding barrier, especially its wall, is used to impede a (charging) signal from one channel crossing over to the adjacent channel and, thus, prevents or at least reduces signal interference between the adjacent channels. In other words, the shielding barrier has the expedient effect to attenuate cross-coupling between the two transmission channels. That also improves the efficacy of the charging device due to reduced transmission losses.

For that effect the charging device according to the invention expediently makes use of two features of the shielding barrier. These are the material of the shielding barrier on the one hand and the dimensions of the shielding barrier, especially its wall, on the other hand. The dimensions are height, length and thickness. Hereby, the thickness is measured in the direction of the distance between said first and second transmitter coils. The length and height are both measured within the plane of the wall and, thus, each perpendicular with regards to the thickness. The goal of the invention is to attenuate the cross-coupling such that the behavior is approximated to the behavior of a single-channel transmitter coil antenna.

In a preferred embodiment said first and second transmitter coils are aligned within a common winding plane (which in turn is perpendicular to both coil axes). In that case, the wall of the shielding barrier is expediently aligned perpendicular to that winding plane.

In a further preferred embodiment, the dimensions, especially at least one of the height, the thickness and the length, of the wall are chosen in dependence on the material of the wall.

Expediently, these dimension(s) of the wall are furthermore (additionally or alternatively to the dependence on the wall-material) chosen in dependence on the targeted effect of reduction of the cross-coupling effect between transmissions of said first and second transmitter coils (channels) - which is in turn characterized as described above by the input impedance and scattering parameters such as return loss and transfer gain. Hereby, as mentioned above, the dimension(s) of the wall are preferably chosen such that an input impedance of the transmitter coils is similar to a sole transmitter coil and/or to achieve a transfer gain of at least -17dB, more preferred of -20dB (especially, while both transmitter coils are "active"). Such reduction of input impedance and/or transfer gain each resemble a criterion for designing the wall. Another cumulative or alternative criterion for wall design is another scattering parameter, namely return loss. As described above the two criteria of input impedance and return loss are preferably chosen to approximate the respective measure of a standalone transmitter coil.

In a yet further preferred embodiment, a material of high permeability is chosen as the magnetic material of the wall. In that case, expediently a ferrite material is chosen. Such magnetic material, especially ferrite, is normally used for the core of an electric transformer or inductor because of its high permeability and low loss at high frequencies. High permeability is to be understood such that the material is more conductive with respect to a magnetic field and that the material can easily absorb a generated magnetic field. A lossy magnetic material would dissipate the magnetic field. A good ferrite material will redirect the propagation of the magnetic field. As such, both lossy and ferrite magnetic material do not allow a penetration of the magnetic field so that the other channel transmitter coil could not pick up the magnetic field. Furthermore, a high permeability of the shielding barrier leads to an increase of inductance of the transmitter coils. This would also lead to a shift of a resonance frequency of the transmitter coils to a lower frequency.

In an expedient embodiment a copper, aluminum or silver is chosen as the electro-conductive material. Materials such as copper, silver or aluminum have besides their electrical conductivity a low permeability (especially compared to the magnetic material). The electro-conductive material can, thus, absorb an electric field and scatter it over the conductive material. It can also block a magnetic field by attenuating it. Which in turn results in a reduction of the magnetic energy pick up by other channels. Mumetal is a composition material that contains nickel, iron, and other material. Normally, it has high permeability properties but with effectiveness only up to a frequency of 100 kHz. That is not effective for magnetic fields of high (i.e., higher than 100 kHz) frequencies. However, mumetal has similar properties as electro-conductive material due to its major alloy components nickel and iron. It has a conductive behavior that can also absorb electric fields and attenuate magnetic fields. Due to the low permeability and high conductivity of the electro-conductive material, the shielding barrier made of it would reduce the inductance of the transmitter coils and, thus, lead to a shift of the resonance frequency of the transmitter coils to a higher frequency.

The stacked material is made of two layers of the magnetic material sandwiching a layer of the electro-conductive material. Such a stack of magnetic and electro-conductive material would further improve the cross-coupling attenuation. Hereby, the stacked material can effectively shield the cross-coupling of two transmitter coils because it combines both aforementioned properties, that is redirecting the electromagnetic field and attenuating the magnetic field. The magnetic material is usually dominating the electro-conductive material on the inductance change. Therefore, the stacked material with equal thickness compared to the wall made of a sole material would have a slight increase of inductance. That, again, will result in shifting the resonance frequency of the transmitter coils only to a slightly lower frequency (compared to a wall made solely of ferrite).

In an expedient embodiment, the height of the wall, which is measured in the direction of the coil axis of at least one of the transmitter coils, is chosen between at least 5 Millimeters and 40 Millimeters, preferably between 15 and 35 Millimeters. Most preferably, the height is chosen at 30 Millimeters. Preferably, the height of the wall is (expediently at a multiple) bigger than the coil thickness (also described as height or length; i.e., in the direction of the respective coil axis).

In a further expedient embodiment, the thickness of the wall is chosen between 0,25 and 2,5 Millimeters, preferably at 2 Millimeters.

In the case of the stacked material, the thickness of each of the magnetic material layers ranges preferably between 0,1 and 0,8 Millimeters and the thickness of the electro-conductive material layer ranges especially from 0,4 to 1 Millimeter.

In a yet further expedient embodiment, the length of the wall is chosen between 40 % and 110 % of the largest diameter of one of the transmitter coils, measured in the length direction of the wall. Especially, the length is chosen between 5 and 15 Millimeters, preferably at 10 Millimeters (in the preferred case of width measured parallel to the wall or diameter of the coil being 10 Millimeters).

The above exemplary measures of the wall are chosen for transmitter coils having a length (or diameter) of round about ten millimeters. For such transmitter coils the above values of the passing criteria of input impedance, transfer gain and/or return loss may be met by these exemplary measures. By upscaling or downscaling the dimensions of the transmitter coils, the dimensions of the wall will have to be changed accordingly on the basis of the respective criterion.

In a preferred embodiment both transmitter coils are configured for magnetic resonance charging. Especially, both transmitter coils are individually tuned to a magnetic resonance charging frequency of about 13,56 MHz. That frequency might be influenced by the shielding barrier, as already hinted above. However, such influence to the resonance charging frequency is reduced to a maximum deviation of about 0,2 MHz.

The hearing instruments system according to the invention comprises the charging device as described above as well as two hearing instruments set up to be wirelessly charged. The hearing instruments system shows the same features and the respective resulting benefits as the charging device.

The conjunction "and/or" is to be understood here and in the following in particular in such a way that the features linked by means of this conjunction can be realized both together and as alternatives to each other.

In the following the invention is described by the help of a drawing. Therein is shown by
- Fig. 1: in a side view schematically a hearing instruments system comprising two hearing instruments and a wireless charging device,
- Fig. 2: in a perspective view schematically a transmitter system of the wireless charging device,
- Fig. 3: in a side view schematically the transmitter system,
- Fig. 4: in a sectional view the transmitter system,
- Fig. 5: in a table and a perspective view a standalone transmitter coil and respective electromagnetic measures,
- Fig. 6: in a sketch as in Fig. 5 two adjacent transmitter coils that show cross-coupling effects,

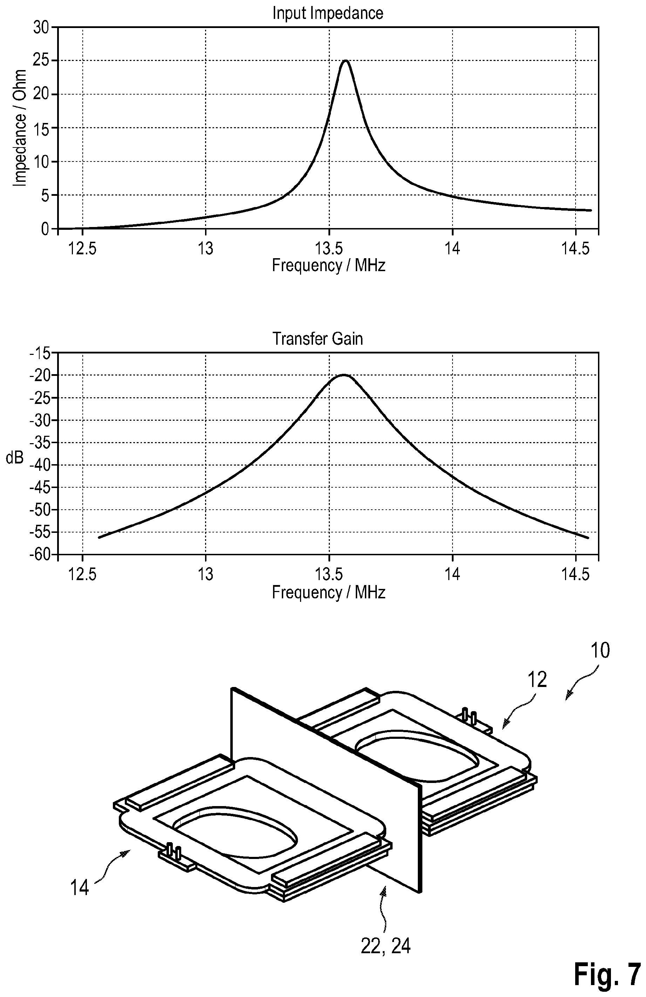

- Fig. 7: in a sketch as in Fig. 5 the transmitter system of Fig. 2 and its related electromagnetic measures,
- Fig. 8: in a diagram a transmitted gain versus thickness of a shielding barrier between two transmitter coils of the transmitter system,
- Fig. 9: in a view as in Fig. 1 the transmitter system with an external receiver, and
- Fig. 10: in a view as in Fig. 2 a simulation of magnetic fields caused by the situation of Fig. 9.

Same reference signs are used for equal parts throughout all figures.

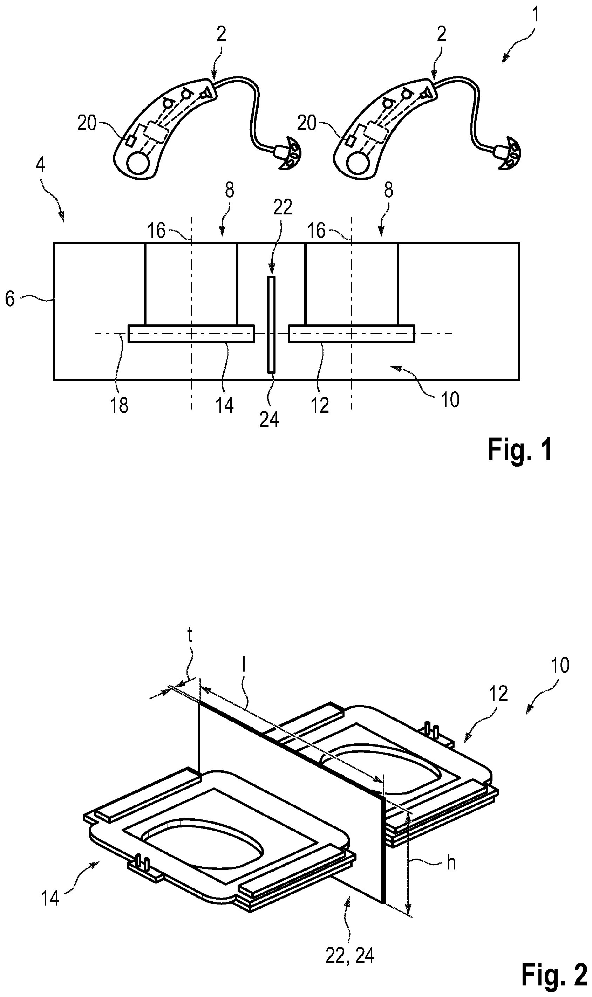

Fig. 1 shows a hearing instruments system 1. That hearing instruments system 1 comprises two hearing instruments, in short: hearing aids 2, and a wireless charging device 4 set up for wirelessly charging the hearing aids 2. For that, the charging device 4 comprises a housing 6 with two pits 8 for placement of the hearing aids 2. Furthermore, the charging device 4 comprises a transmitter system 10 which in turn comprises a first transmitter coil 12 and a second transmitter coil 14 that are aligned under the respective pit 8 adjacent to each other (see also Fig. 2).

Respective coil axes 16 of both coils 12 and 14 are aligned parallel to each other. Additionally, both coils 12 and 14 are aligned within a common winding plane 18. The transmitter coils 12 and 14 are set up to transfer energy to receiver coils 20 of the hearing aids 2 by way of inductive energy transfer. Especially, the transmitter coils 12 and 14 as well as the receiver coils 20 are set up for so called magnetic resonance charging. That means that the transmitter coils 12 and 14 broadcast energy within a very narrow band, the so-called resonance frequency, which is set to 13,56 MHz.

In one example, though not restricting, the length of the transmitter coils 12 and 14 is ten millimeter.

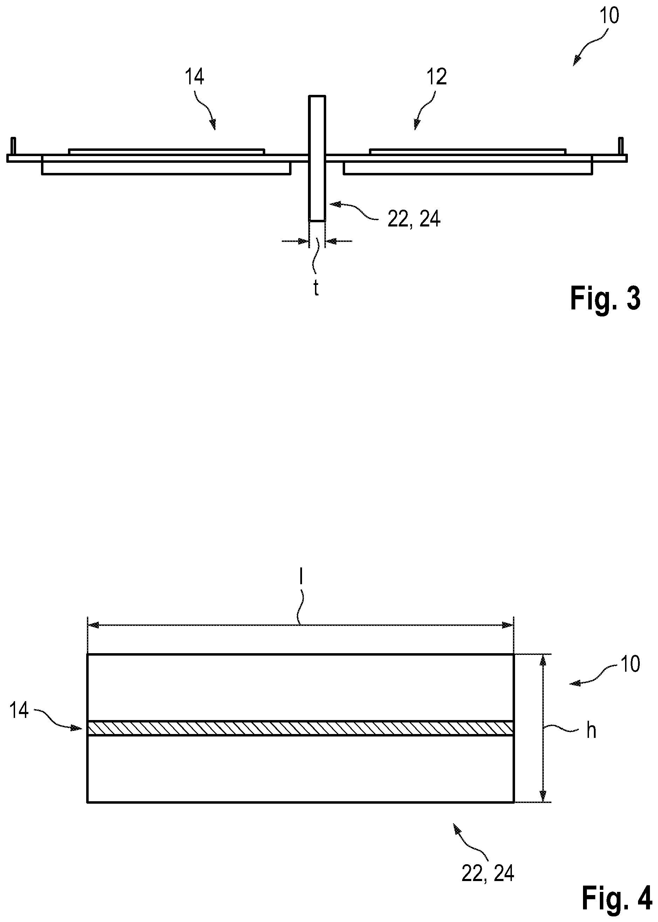

To reduce cross-coupling between the transmitter coils 12 and 14 and, thus, energy loss during the charging process of the hearing aids 2 the transmitter system 10 comprises a shielding barrier 22 which comprises a (shielding) wall 24. In the specific embodiment shown in the figures, the shielding barrier 22 is, in fact, made up only by the wall 24. The wall 24 is positioned between the first and second transmitter coils 12 and 14 with its (wall-) plane aligned parallel to the coil axes 16 and, thus, perpendicular to the winding plane 18. The dimensions of the wall 24 are thickness t (measured in the direction of the distance between both transmitter coils 12 and 14), length l (measured in the winding plane 18) and height h (measured in the direction of the coil axes 16; compare Fig. 3 and 4).

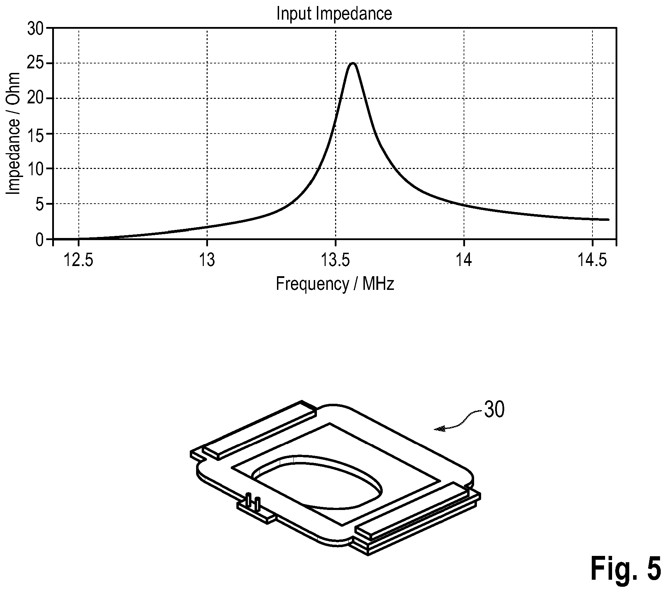

The material and dimensions of the wall 24 are chosen in dependence on each other with the target to achieve a suppression of cross-coupling during energy broadcast of the transmitter coils 12 and 14. Especially, for the transmission system 10 a behavior as close as possible to a standalone transmitter coil 30 (s. Fig. 5) is aimed at. One of the criteria of low cross-coupling is a -20 dB value of a so-called transfer gain between both transmitter coils 12 and 14. Other measures or properties considered as respective criteria during design process of the wall 24 are return loss and input impedance. In the following, several embodiments of the wall 24 and the effects on electrical and magnetic properties (especially the measures of the criteria above) of the transmitter system 10 are described.

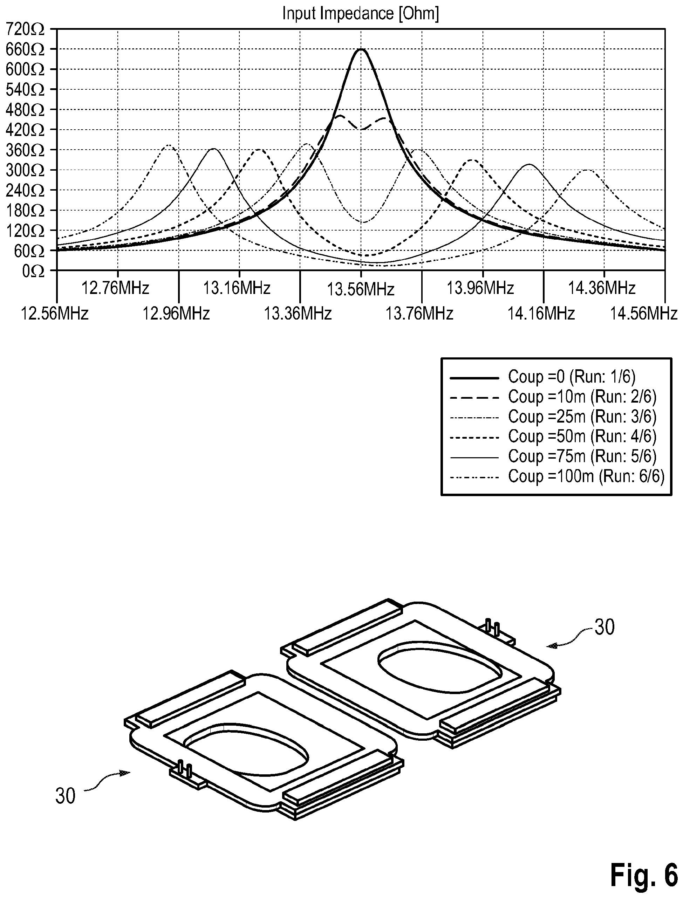

The input impedance means the impedance seen from the respective transmitter coil 12, 14 or 30. Input impedance is measured in Ohm. For the standalone transmitter coil 30 the input impedance has a single peak value at the resonance frequency, here at 13,56 MHz (s. Fig. 5). The input impedance exponentially decreases at both higher frequency and lower frequency. As it can be seen from Fig. 6 that two adjacent standalone (i.e., not shielded) transmitter coils 30 cause that the input impedance is split into two local peaks at different frequencies due to cross-coupling ("crosstalk").

The return loss is a reflected wave of that transmitter coil 12, 14 or 30. The unit measurement of the return loss parameter is decibel. A decreased return loss indicates a weaker cross-coupling among two adjacent transmitter coils 12, 14 or 30. The single, standalone transmitter coil has a minimum peak return loss at the resonance frequency and a higher return loss at both higher frequency and lower frequency.

The transfer gain is a decibel parameter that indicates the ratio of output of adjacent transmitter coils 12, 14 or 30 over transmitter coil input. In other words, the transfer gain means the attenuation of transmitted power from one transmitter coil 12, 14 or 30 to the adjacent transmitter coil 12, 14 or 30, respectively. A lower gain indicates weaker cross-coupling between two transmitter coils 12, 14 or 30. For example, the transfer gain of 0 dB at the resonance frequency means two adjacent transmitter coils 12, 14 or 30 are 100 % coupled. The transfer gain value of -20 dB which is equivalent to 0,01 indicates that only 1 % of transmitted power crosses over from one transmitter coil 12, 14 or 30 to the respective other one. A low transfer gain implies a low cross-coupling between adjacent transmitter coils 12, 14 or 30.

For the material of the wall 24 three variants are described below, specifically a magnetic material of high permeability, here a ferrite, an electro-conductive material, here aluminum, and a stack of two layers of ferrite sandwiching a layer of aluminurr , forming a wall of a stacked material according to the present invention.

For a ferrite, the thickness of the shielding barrier 22, respectively the wall 24, determines the absorbability of a magnetic field. Thicker ferrite material absorbs the magnetic field more effectively.

For an aluminum, a thicker wall 24 can attenuate the penetration of the magnetic field.

Overall, a thicker wall 24 with magnetic material and/or electro-conductive material could reduce the cross-coupling of the two transmitter coils 12 and 14.

To understand the effect of the material of the wall 24 on cross-coupling, several simulations have been conducted. The input impedance, return loss, and transfer gain has been used to quantify the cross-coupling effect. The simulation was carried out without the shielding barrier 22 (i.e., for two unshielded adjacent transmitter coils 30) and for the transmitter system 10. For the simulation of the transmitter system 10 different materials for the wall 24 such as ferrite, aluminum, and stacked up material have been chosen. The wall 24 was always modeled with a thickness t of 2mm, a height h of 30 mm as well as with a length l of 10 mm.

The (single) standalone transmitter coil 30 has only a single maximum peak of input impedance at about 25 Ohm and a very small minimum peak return loss at - 175 dB at the resonance frequency. A very small minimum peak return loss of a single standalone transmitter coil 30 is just an ideal case but it will not happen as there is always a reflection wave loss.

When two unshielded transmitter coils 30 are placed near together and cross-coupled, the input impedance splits into two local maxima at two different frequencies (values at approximately 14 to 16 Ohm). The minimum return loss value is at -11 dB and the maximum transfer gain is at -7 dB for these cross-coupled transmitter coils 30 (without any shielding barrier).

The simulation result also shows that ferrite, aluminum, and stacked material can effectively lead to converging the input impedance into a single peak at the resonance frequency again, and decrease the return loss and transfer gain. For the ferrite the maximum input impedance is at about 24,5 Ohm, the minimum return loss at about -40 dB and the maximum transfer gain at about -20 dB. The aluminum shows a maximum input impedance at about 20 Ohm, a minimum return loss at about -25 dB and a maximum transfer gain at -12 dB. The simulation result also shows that the stacked material (0,5 mm of ferrite at each side of a 1 mm aluminum layer) has the highest maximum input impedance at about 24,8 Ohm, the lowest minimum return loss at about -43 dB and the lowest maximum transfer gain at about -22 dB. The above values are measured at the resonance frequency of 13,56 MHz, respectively.

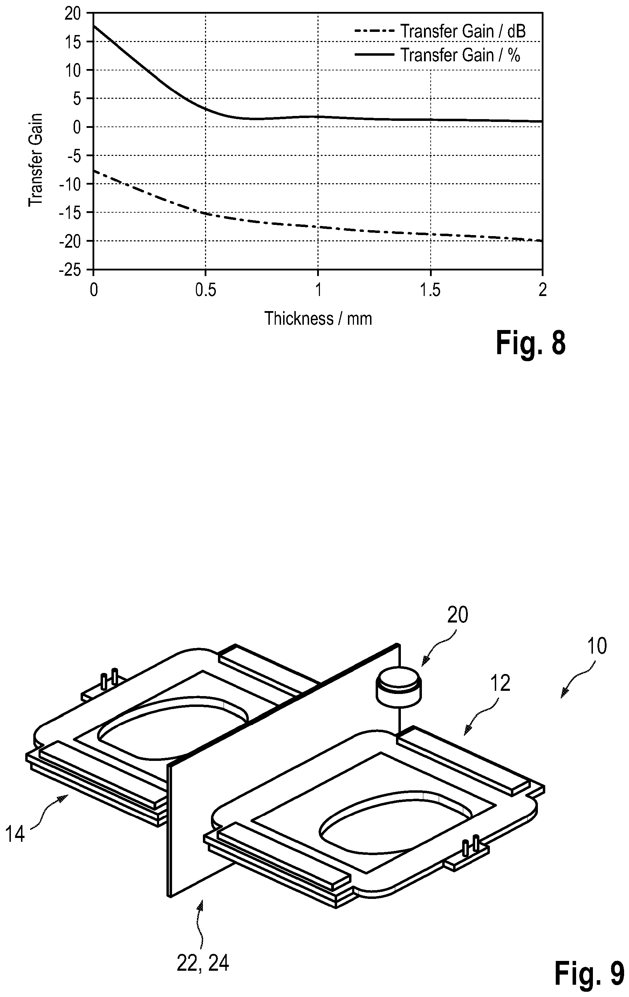

To understand the effect of increasing the thickness t of the wall 24, further simulations have been conducted. For that simulation a similar material, similar height h, and similar length l have been used. The thickness t of the wall 24 varies from 0 mm (no shielding) up to 2.0 mm. Ferrite is used as the material of the wall 24 in that simulation. The height h of the wall 24 is 30 mm and its length I is 10 mm. The thickness t has been increased by steps of 0,5 mm. The maximum transfer gain decreased in steps from about -7,5 dB (0 mm) to -15 dB (0,5 mm), - 17,4 dB (1 mm), -18,7 dB (1,5 mm) and -19,8 dB (2 mm) - s. Fig. 8. The above values are measured at the resonance frequency of 13,56 MHz, respectively.

The above simulation results show that a thicker wall 24 leads to a low transfer gain, and thus, to a reduction of cross-coupling between the two transmitter coils 12 and 14. Fig. 8 shows schematically the influence of thickness t on transfer gain for the wall 24 made of ferrite. For better understanding, the transfer gain is also shown as a percentage. As it may be derived from the plot, the influence on the transfer gain is reduced (i.e., the gradient of the curve becomes smaller) at a thickness t bigger than 0,7 mm for the wall 24 made of ferrite. However, the target of the shielding barrier is to have a transfer gain lower than 1,5 %. So, the value of the thickness t for the wall 24 must be more than 1,3 mm.

Another simulation was carried out to show the influence of the height h of the wall 24. The simulation was carried out with the same material, same thickness t, and same length l, but varying height h. As the material of the wall 24 aluminum has been chosen, for the length l 10 mm and for the thickness t 0.4mm. The height t was chosen to be 20 mm, 25 mm and 30mm.

For the height h from 20mm to 30mm, the input impedance of the wall 24 converges from multiple peaks step by step into a single peak. At the same, the minimum return loss decreases from -15 dB (h=20 mm) to -17,5 dB (h=25 mm) and to -18 dB (h=30 mm). The maximum transfer gain reduces also, specifically from -8,5 dB (h=20 mm) to -10,5 dB (h=25 mm) and -13,5 dB (h=30 mm). The above values are measured at the resonance frequency of 13,56 MHz, respectively.

Comparable to the simulations described above, a further simulation regarding the influence of the length l of the wall 24 was carried out. The length l was varied from 5 mm to 7,5 mm and 10 mm (being 50, 75 and 100 % of the diameter of the transmitter coils 12, 14 in the direction of the wall 24). The thickness t was set to 2 mm and the height h to 30 mm. As material of the wall 24 ferrite has been chosen.

For the shortest length a maximum input impedance of 22 Ohm, a minimum return loss of -29 dB and a maximum transfer gain of -14,5 dB was discovered. For the length l of 7,5 mm a maximum input impedance of 23,5 Ohm, a minimum return loss of -34,5 dB and a maximum transfer gain of -17 dB was discovered. For the length l of 10 mm a maximum input impedance of 24,5 Ohm, a minimum return loss of -40 dB and a maximum transfer gain of -20 dB was discovered. The above values are measured at the resonance frequency of 13,56 MHz, respectively.

This simulation results imply that a greater length of the wall 24 leads to a better cross-coupling attenuation. That is due to more magnetic field absorption or better magnetic field attenuation. In the case of coil design as sketched in Fig. 2, the magnetic field of the transmitter coils 12, 14 propagates from the center and returns through the two arms of the transmitter coils 12, 14. The magnetic field, however, does not further propagate out from the transmitter coil outline. For an effective electromagnetic field shielding, the length l of the wall 24 is set to at least the same or larger value than the diameter (measured parallel to the wall 24) of the transmitter coil 12 or 14, respectively.

For the sake of attenuating a vertically downward directed component of the magnetic field a copper layer of a circuit board carrying the respective transmission coils 12, 14 is placed at the bottom of (i.e., beneath) the transmitter coils 12, 14. So, the wall 24 of the shielding barrier 22 extending down to the circuit board would be sufficient for preventing the generated vertical downward magnetic field to cross over. On the other side, the magnetic field may propagate freely upwards.

In summary, a largely dimensioned shielding barrier 2 has a more effective cross-coupling attenuation result. However, increasing the dimension of the shielding barrier 2 will add more cost, weight, and enlarge the size of the charger device 1 at the same time.

When the (unshielded) transmitter coil 30 is coupled with another (unshielded) transmitter coil 30 that has almost the same resonance frequency, the input impedance will be split into two peaks at two different frequencies (as shown already above). With a known coupling factor among such two transmitter coils 30, the splitting frequency of a transmitter coil can be obtained using equation (1) where f₀ is the resonant frequency and k is the coupling factor. When the two channel transmitter coils 30 are cross-coupled, the phase angle of one transmitter coil 30 is split into multiple zero-crossing points which is one at a higher frequency and one at a lower frequency than the resonance frequency. A stronger cross-coupling of the two transmitter coils 30 would split the two peaks of input impedance further apart from the resonance frequency. A stronger cross-coupling of these two transmitter coils 30 also generates multiple zero crossing phase angles further away to a higher frequency and lower frequency. Fig. 6 illustrates the input impedance against frequency versus various coupling factors (in the table of Fig. 6 named "Coup") for two cross-coupled transmitter coils 30. ${f}_{\pm split} = \frac{{f}_{0}}{\sqrt{1 \pm k}}$

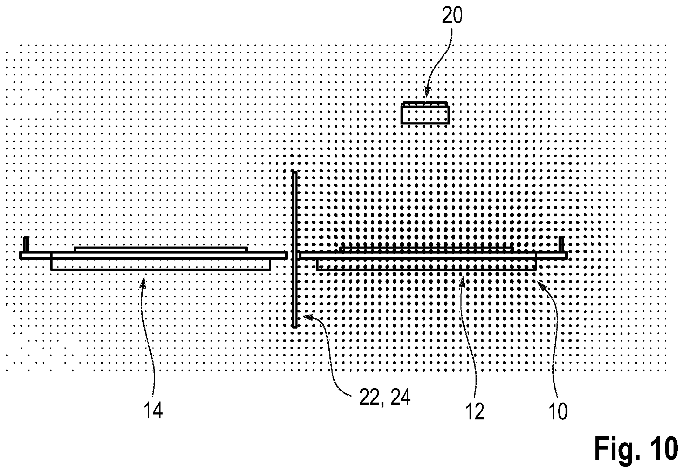

Fig. 9 and 10 describe a simulation result of a model (i.e., the transmitter system 10) with a 2 mm thick wall 24 and a receiver coil 20 placed above transmitter coil 12. This model is used as checking the effect of a generated magnetic field from the transmitter coil 12 crossing over to the adjacent side with the existence of the wall 24. The simulation is carried out under the condition that both transmitter coils 12, 14 and the receiver coil 20 are well tuned to the same resonance frequency. The simulation is under the assumption that the wall 24 can shield the cross-coupling between both transmitter coils 12, 14.

Fig. 10 shows the scattering of the magnetic field with the transmitted power given to the right transmitter coil 12. The emitted magnetic field is scattered with high density at the right top space of transmitter coil 12 and low density at the left top space. This simulation result indicates that the wall 24 can attenuate the cross-coupling between two transmitter coils 12 and 14.

To investigate the effect of the wall 24 on the resonance frequency, tests in form of additional simulations have been conducted. Four scenarios have been simulated:
first (again) a standalone transmitter coil,
second, a standalone transmitter coil besides a 2mm thick ferrite wall,
third, a standalone transmitter coil besides a 2mm thick aluminum wall, and fourth, a standalone transmitter coil besides a wall of stacked material, comprising layers of 0,18mm ferrite, 0,4mm aluminum and 0,18mm ferrite.
Within these tests the frequency of the maximum input impedance and the minimum return loss was evaluated. For the standalone transmitter coil that frequency is 13,63 MHz. For the ferrite wall the frequency is 13,57 MHz and for the aluminum wall the frequency is 13,71 MHz. For the stacked material that frequency is at 13,61 MHz. Thus, the ferrite wall shifts the resonance frequency of the transmitter coil to a lower frequency and the aluminum wall shifts the resonance frequency of the transmitter coil to a higher frequency. The stacked material wall results in a shift of resonance frequency to a lower frequency but not as low as the pure ferrite wall.

Another measurement test was done by simulation to investigate the effectiveness of ferrite material to the cross-coupling attenuation. The test model are two cross-coupled transmitter coils with and without a shielding barrier between. Ferrite material is used as the representative of the wall having a thickness of 2 mm, length of 10 mm (100 % covered), and height of 30 mm. For the unshielded, cross-coupled transmitter coils a maximum input impedance was detected at 13.57 MHz showing 17,4 Ohm, a minimum return loss at 13,59 MHz showing -5,8 dB and a maximum transfer gain at 13,64 MHz showing -10 dB. For the shielded coils the respective values are 25,23 Ohm at 13,57 MHz, minimum return loss of -9,53 dB at 13,56 MHz and maximum transfer gain of -20,73 dB at 13,57 MHz. Based on that result, the wall 24, being made of ferrite, 2 mm thickness, 10 mm length, and 30 mm height, can effectively attenuate the return loss and transfer gain. The ferrite wall 24 can also recover a certain amount of the maximum input impedance and minimum return loss.

The subject matter of the invention is not limited to the embodiments described above. Rather, further embodiments of the invention can be derived by the skilled person from the above description. In particular, the individual features of the invention described on the basis of the various embodiment examples and the embodiment variants thereof can also be combined with one another in other ways within the scope of the invention as defined in the appended claims.

### List of reference signs

- 1: hearing instruments system
- 2: hearing instrument
- 4: charging device
- 6: housing
- 8: pit
- 10: transmitter system
- 12: transmitter coil
- 14: transmitter coil
- 16: coil axis
- 18: winding plane
- 20: receiver coil
- 22: shielding barrier
- 24: wall
- 30: transmitter coil

- h: height
- l: length
- t: thickness

## Claims

1. Charging device (4) for wirelessly charging hearing instruments (2), comprising
- a first transmitter coil (12) for transmission of electromagnetic energy to a receiver coil (20) of a first hearing instrument (2),
- a second transmitter coil (14) for transmission of electromagnetic energy to a receiver coil (20) of a second hearing instrument (2), said second transmitter coil (14) being aligned adjacent to said first transmitter coil (12), and
- a shielding barrier (22), having at least a wall (24) separating said first and second transmitter coils (12, 14) from each other,
**characterized in that** said wall (24) is made of
a stacked material made of layers of a magnetic material and a electro-conductive material, wherein the stacked material is made of two layers of the magnetic material sandwiching a layer of the electro-conductive material.

2. Charging device (4) according to claim 1,
wherein said first and second transmitter coils (12, 14) are aligned within a common winding plane (18).

3. Charging device (4) according to claim 1 or 2,
wherein as the magnetic material of the wall (24) a material of high permeability, expediently a ferrite, is chosen.

4. Charging device (4) according to one of claims 1 to 3,
wherein as the electro-conductive material of the wall (24) a copper, aluminum or silver is chosen.

5. Charging device (4) according to one of claims 1 to 4,
wherein the thickness of each of the magnetic material layers ranges between 0,1 and 0,8 Millimeters and the thickness of the electro-conductive material layer ranges from 0,4 to 1 Millimeter.

6. Charging device (4) according to one of claims 1 to 5,
wherein the dimensions (h, l, t) of the wall (24) are chosen in dependence on the material of the wall (24).

7. Charging device (4) according to one of claims 1 to 6,
wherein the dimensions of the wall (24) are chosen in dependence of at least one of the criteria input impedance and scattering parameters such as return loss and transfer gain.

8. Charging device (4) according to claim 7,
wherein the dimensions, especially at least one of a height (h) of the wall (24), measured in the direction of a coil axis (16) of at least one of the transmitter coils (12, 14), a thickness (t) of the wall (24), measured in the direction of the distance between said first and second transmitter coils (12, 14), and a length (l) of the wall (24), are chosen such that an input impedance of the transmitter coils (12, 14) is similar to a sole transmitter coil and/or a transfer gain of the transmitter coils (12, 14) is smaller than -17dB.

9. Charging device (4) according to one of claims 6 to 8,
wherein a length of the transmitter coils (12, 14) is ten millimeters and the height (h) of the wall (24) is chosen between at least 5 Millimeters and 40 Millimeters, preferably between 15 and 35 Millimeters.

10. Charging device (4) according to one of claims 7 to 9,
wherein the length of the transmitter coils (12, 14) is ten millimeters, and the thickness (t) of the wall (24) is chosen between 0,25 and 2,5 Millimeters.

11. Charging device (4) according to one of claims 6 to 10,
wherein the length (l) of the wall (24) is chosen between 40 % and 110 % of the largest diameter of one of the transmitter coils (12, 14) measured in the length direction of the wall (24).

12. Charging device (4) according to one of claims 1 to 11,
wherein both transmitter coils (12, 14) are configured for magnetic resonance charging, especially wherein both transmitter coils (12, 14) are individually tuned to a magnetic resonance charging frequency of about 13,56 MHz.

13. Hearing instruments system (1) comprising said charging device (4) according to one of claims 1 to 12 and two hearing instruments (2) set up to be wirelessly charged.

## Patentansprüche

1. Ladevorrichtung (4) zum drahtlosen Laden von Hörgeräten (2), umfassend
- eine erste Senderspule (12) für die Übertragung von elektromagnetischer Energie an eine Empfängerspule (20) eines ersten Hörgeräts (2),
- eine zweite Senderspule (14) für die Übertragung von elektromagnetischer Energie an eine Empfängerspule (20) eines zweiten Hörgeräts (2), wobei die zweite Senderspule (14) neben der ersten Senderspule (12) ausgerichtet ist, und
- eine Abschirmbarriere (22), die mindestens eine Wand (24) aufweist, die die erste und die zweite Senderspule (12, 14) voneinander trennt,
**dadurch gekennzeichnet, dass** die Wand (24) hergestellt ist aus
einem Schichtmaterial aus Schichten von einem magnetischen Material und einem elektrisch leitfähigen Material, wobei das Schichtmaterial aus zwei Schichten des magnetischen Materials besteht, zwischen denen eine Schicht des elektrisch leitfähigen Materials angeordnet ist.

2. Ladevorrichtung (4) gemäß Anspruch 1,
wobei die erste und die zweite Senderspule (12, 14) innerhalb einer gemeinsamen Wicklungsebene (18) ausgerichtet sind.

3. Ladevorrichtung (4) gemäß Anspruch 1 oder 2,
wobei als magnetisches Material der Wand (24) ein Material mit hoher Permeabilität, vorzugsweise ein Ferrit, gewählt ist.

4. Ladevorrichtung (4) gemäß einem der Ansprüche 1 bis 3,
wobei als elektrisch leitfähiges Material der Wand (24) Kupfer, Aluminium oder Silber gewählt ist.

5. Ladevorrichtung (4) gemäß einem der Ansprüche 1 bis 4,
wobei die Dicke jeder der magnetischen Materialschichten im Bereich zwischen 0,1 und 0,8 Millimetern liegt und die Dicke der elektrisch leitfähigen Materialschicht im Bereich zwischen 0,4 und 1 Millimeter liegt.

6. Ladevorrichtung (4) gemäß einem der Ansprüche 1 bis 5,
wobei die Abmessungen (h, l, t) der Wand (24) in Abhängigkeit vom Material der Wand (24) gewählt sind.

7. Ladevorrichtung (4) gemäß einem der Ansprüche 1 bis 6,
wobei die Abmessungen der Wand (24) in Abhängigkeit von mindestens einem der Kriterien Eingangsimpedanz und Streuparameter wie Rückflussdämpfung und Übertragungsgewinn gewählt sind.

8. Ladevorrichtung (4) gemäß Anspruch 7,
wobei die Abmessungen, insbesondere mindestens eine Höhe (h) der Wand (24), gemessen in Richtung einer Spulenachse (16) mindestens einer der Senderspulen (12, 14), eine Dicke (t) der Wand (24), gemessen in Richtung des Abstands zwischen der ersten und der zweiten Senderspule (12, 14), und einer Länge (l) der Wand (24) so gewählt sind, dass eine Eingangsimpedanz der Senderspulen (12, 14) ähnlich einer einzelnen Senderspule ist und/oder ein Übertragungsgewinn der Senderspulen (12, 14) kleiner als -17 dB ist.

9. Ladevorrichtung (4) gemäß einem der Ansprüche 6 bis 8,
wobei eine Länge der Senderspulen (12, 14) zehn Millimeter beträgt und die Höhe (h) der Wand (24) zwischen mindestens 5 Millimetern und 40 Millimetern, vorzugsweise zwischen 15 und 35 Millimetern, gewählt ist.

10. Ladevorrichtung (4) gemäß einem der Ansprüche 7 bis 9,
wobei die Länge der Senderspulen (12, 14) zehn Millimeter beträgt und die Dicke (t) der Wand (24) zwischen 0,25 und 2,5 Millimeter gewählt ist.

11. Ladevorrichtung (4) gemäß einem der Ansprüche 6 bis 10,
wobei die Länge (l) der Wand (24) zwischen 40 % und 110 % des größten Durchmessers einer der Senderspulen (12, 14) beträgt, gemessen in Längsrichtung der Wand (24).

12. Ladevorrichtung (4) gemäß einem der Ansprüche 1 bis 11,
wobei beide Senderspulen (12, 14) für Magnetresonanzladung ausgelegt sind, insbesondere wobei beide Senderspulen (12, 14) einzeln auf eine Magnetresonanz-Ladefrequenz von etwa 13,56 MHz abgestimmt sind.

13. Hörgerätesystem (1), das die Ladevorrichtung (4) gemäß einem der Ansprüche 1 bis 12 und zwei Hörgeräte (2) umfasst, die für kabelloses Laden ausgelegt sind.

## Revendications

1. Dispositif de charge (4) destiné à charger sans fil des appareils auditifs (2), comprenant
- une première bobine émettrice (12) pour la transmission d'énergie électromagnétique à une bobine réceptrice (20) d'un premier appareil auditif (2),
- une deuxième bobine émettrice (14) pour la transmission d'énergie électromagnétique à une bobine réceptrice (20) d'un deuxième appareil auditif (2), ladite deuxième bobine émettrice (14) étant alignée de façon adjacente à ladite première bobine émettrice (12), et
- une barrière de protection (22), comportant au moins une paroi (24) séparant lesdites première et deuxième bobines émettrices (12, 14) l'une de l'autre,
**caractérisé en ce que** ladite paroi (24) est constituée
d'un matériau empilé constitué de couches d'un matériau magnétique et d'un matériau électroconducteur, le matériau empilé étant constitué de deux couches du matériau magnétique prenant en sandwich une couche du matériau électroconducteur.

2. Dispositif de charge (4) selon la revendication 1,
dans lequel lesdites première et deuxième bobines émettrices (12, 14) sont alignées à l'intérieur d'un plan d'enroulement commun (18).

3. Dispositif de charge (4) selon la revendication 1 ou 2,
dans lequel un matériau de forte perméabilité, avantageusement une ferrite, est choisi comme matériau magnétique de la paroi (24).

4. Dispositif de charge (4) selon une des revendications 1 à 3,
dans lequel le cuivre, l'aluminium ou l'argent est choisi comme matériau électroconducteur de la paroi (24).

5. Dispositif de charge (4) selon une des revendications 1 à 4,
dans lequel l'épaisseur de chacune des couches de matériau magnétique est comprise entre 0,1 et 0,8 millimètre et l'épaisseur de la couche de matériau électroconducteur est comprise entre 0,4 et 1 millimètre.

6. Dispositif de charge (4) selon une des revendications 1 à 5,
dans lequel les dimensions (h, l, t) de la paroi (24) sont choisies en fonction du matériau de la paroi (24).

7. Dispositif de charge (4) selon une des revendications 1 à 6,
dans lequel les dimensions de la paroi (24) sont choisies en fonction d'au moins un des critères que sont l'impédance d'entrée et les paramètres de diffusion tels que l'affaiblissement de réflexion et le gain de transfert.

8. Dispositif de charge (4) selon la revendication 7,
dans lequel les dimensions, en particulier au moins une dimension parmi une hauteur (h) de la paroi (24), mesurée dans la direction d'un axe de bobine (16) d'au moins une des bobines émettrices (12, 14), une épaisseur (t) de la paroi (24), mesurée dans la direction de la distance entre lesdites première et deuxième bobines émettrices (12, 14), et une longueur (l) de la paroi (24), est choisie de telle sorte qu'une impédance d'entrée des bobines émettrices (12, 14) est similaire à celle d'une seule bobine émettrice et/ou un gain de transfert des bobines émettrices (12, 14) est inférieur à -17 dB.

9. Dispositif de charge (4) selon une des revendications 6 à 8,
dans lequel une longueur des bobines émettrices (12, 14) est de dix millimètres et une hauteur (h) de la paroi (24) est choisie entre au moins 5 millimètres et 40 millimètres, de préférence entre 15 et 35 millimètres.

10. Dispositif de charge (4) selon une des revendications 7 à 9,
dans lequel la longueur des bobines émettrices (12, 14) est de dix millimètres, et l'épaisseur (t) de la paroi (24) est choisie entre 0,25 et 2,5 millimètres.

11. Dispositif de charge (4) selon une des revendications 6 à 10,
dans lequel la longueur (l) de la paroi (24) est choisie entre 40 % et 110 % du plus grand diamètre d'une des bobines émettrices (12, 14) mesuré dans la direction de la longueur de la paroi (24).

12. Dispositif de charge (4) selon une des revendications 1 à 11,
dans lequel les deux bobines émettrices (12, 14) sont conçues pour une charge par résonance magnétique, en particulier dans lequel les deux bobines émettrices (12, 14) sont accordées individuellement sur une fréquence de charge par résonance magnétique d'environ 13,56 MHz.

13. Système d'appareils auditifs (1) comprenant ledit dispositif de charge (4) selon une des revendications 1 à 12 et deux appareils auditifs (2) configurés pour être chargés sans fil.
